# EUROPÄISCHE PATENTSCHRIFT

(11) **EP 3 154 241 B1**
(45) Veröffentlichungstag und Bekanntmachung des Hinweises auf die Patenterteilung: **15.07.2020**
(21) Anmeldenummer: 16192392.5
(22) Anmeldetag: 05.10.2016
(51) Int. Cl.: H04L 29/08, B64D 11/00, H04B 10/116

(54) **SENSORNETZWERK MIT HETEROGENER SENDE- EMPFANGSARCHITEKTUR**
SENSOR NETWORK WITH HETEROGENEOUS SEND-RECEIVE ARCHITECTURE
RÉSEAU DE CAPTEURS AVEC ARCHITECTURE HÉTÉROGÈNE ENVOYER-RECEVOIR

(30) Priorität: 05.10.2015 DE 102015116859
(43) Veröffentlichungstag der Anmeldung: 12.04.2017
(73) Patentinhaber: Airbus Defence and Space GmbH, 82024 Taufkirchen (DE)
(72) Erfinder: Sebald, Johannes, 27721 Ritterhude (DE); Kesuma, Hendra, 28277 Bremen (DE)
(74) Vertreter: Marschall, Stefan

(56) Entgegenhaltungen:
- US-A1- 2013 234 607
- US-B1- 7 002 470
- Qian Huang ET AL: "Integrating Li-Fi Wireless Communication and Energy Harvesting Wireless Sensor for Next Generation Building Management", Paper, 14. Juli 2014 (2014-07-14), Seiten 1-7, XP055342084, Gefunden im Internet: URL:http://docs.lib.purdue.edu/cgi/viewcon tent.cgi?article=1119&context=ihpbc [gefunden am 2017-02-03]
- PEREZ-JIMENEZ R ET AL: "Visible light communication systems for passenger in-flight data networking", CONSUMER ELECTRONICS (ICCE), 2011 IEEE INTERNATIONAL CONFERENCE ON, IEEE, 9. Januar 2011 (2011-01-09), Seiten 445-446, XP031921322, DOI: 10.1109/ICCE.2011.5722675 ISBN: 978-1-4244-8711-0
- SINDHUBALA K ET AL: "Ecofriendly data transmission in visible light communication", PROCEEDINGS OF THE 2015 THIRD INTERNATIONAL CONFERENCE ON COMPUTER, COMMUNICATION, CONTROL AND INFORMATION TECHNOLOGY (C3IT), IEEE, 7. Februar 2015 (2015-02-07), Seiten 1-4, XP032747470, DOI: 10.1109/C3IT.2015.7060133 ISBN: 978-1-4799-4446-0 [gefunden am 2015-03-12]

## Beschreibung

Die Erfindung betrifft ein Ultrabreitband- und Infrarot-Sensornetzwerk zur Erfassung, Verarbeitung und Übertragung von Daten in einem Raum sowie ein Steuerungsverfahren eines Ultrabreitband- und Infrarot- Sensornetzwerks.

Sensornetzwerke werden überall dort eingesetzt, wo Daten von Sensoren erfasst und übertragen werden. Über Sensornetze werden die verschiedenen, von Sensoren erfassten physikalischen Größen, wie Temperatur oder Luftdruck, Drehmoment oder Helligkeit, Druck, Beschleunigung oder Vibration für die Steuerung eventueller Aktoren übertragen. Der wesentliche Unterschied von Sensornetzen gegenüber lokalen Netzen (LAN), WLANs und Mobilfunknetzen besteht darin, dass es sich bei den Sensor- und Aktuatordaten um relativ geringe Datenmengen handelt. Diese Daten können drahtgebunden oder drahtlos übertragen werden, wobei die Transportprotokolle für geringe Datenmengen optimiert sind. Drahtlose Sensornetzwerke sind einfach zu installieren, sie konfigurieren sich selbst und gehören zu den Self Organized Networks (SON).

Die Flexibilität, Mobilität und der Wegfall von Verkabelungen machen den Einsatz von drahtlosen Sensornetzwerken in der Raumfahrt interessant. Durch verteilte Datenerfassung, dezentrale Anwendungssoftware, sowie vernetzte Kommunikation eröffnen sie völlig neue Möglichkeiten.

Der Einsatz von autonomen Sensorknoten erfordert jedoch eine von Verkabelung unabhängige elektrische Energieversorgung. Die Aufgabe kann durch die Nutzung der Energie aus der Umgebung gelöst werden. Somit kann man kleine Mengen von elektrischer Energie aus Quellen wie Umgebungstemperatur, Vibrationen oder Luftströmungen für mobile Geräte mit geringer Leistung gewinnen. Die Möglichkeit, Energie aus der Umgebung zu sammeln, wird als "Energy Harvesting" bezeichnet. Diese ermöglicht geringe Wartungskosten für die Sensorknoten, da auf den Einsatz von Batterien verzichtet werden kann. Eines dieser Sensornetzwerke mit einem autonomen Sensorknoten ist aus US2013/0234607 A1 bekannt.

Als Quelle der Energie für die Sensorknoten kommen hier alle Effekte in Frage, aus denen sich mittels Energiewandlern zumindest geringe Mengen an elektrischer Energie zur Verfügung stellen lassen. Die klassischen Beispiele hierfür sind Licht oder Wärmegradienten. Als Wandler kommen Solarzellen, Peltierelemente (als Thermoelektrische Generatoren betrieben) oder Piezoelemente in Frage. Vibrationen können auch mittels elektromechanischer Wandler genutzt werden. Leider wird damit oft - je nach Energiequelle und den aktuellen Bedingungen - keine kontinuierliche Leistungsabgabe jenseits einiger 10 Mikrowatt bis 1 Milliwatt erreicht. Auch wenn die gewandelte Energie zwischengespeichert und dann in größerem Umfang genutzt wird, ist es immer noch eine Herausforderung, mit dieser Energiemenge ein Mikrocontrollersystem mit drahtloser Kommunikation zu betreiben.

In der Raumfahrt spielt außerdem die Erzeugung und Verträglichkeit gegenüber elektromagnetischen Störungen (EMV) eine wesentliche Rolle. Ein Lösungsansatz ist, im Zusammenhang mit drahtloser Kommunikation, der Einsatz von Infrarot bzw. Ultrabreitband-Sende- und Empfangseinheiten.

Der Nachteil dieser Technologie ist jedoch der relativ hohe Strombedarf (in diesem Fall 200 mA bis 500 mA).Im Besonderen erfordert der kontinuierliche Betrieb eines Ultrabreitband-Empfängers für Ultrabreitband-Sensorknoten in der Raumfahrt einen erheblichen Energiebedarf und ist daher mit der Gewinnung der Energie aus der Umgebung sehr schwer zu realisieren. Die Leistungsaufnahme der typischen Baugruppen eines Ultrabreitband-Empfängers, wie rauscharmer Verstärker (LNA) bzw. Verstärker mit variablen Verstärkung (VGA), ist zwischen 2 mW - 8.8 mW bzw. zwischen 1.2 mW - 3 mW. Außerdem verbraucht dazu ein A/D Umsetzer (ADC) mit einer Abtastrate von 500 MS/s circa 7.8 mW.

Ein weiteres Problem besteht in der Zeitsynchronisierung zwischen Ultrabreitband- und/oder Infrarot-Sensorknoten und dem Access-Point.

Die auf den einzelnen Sensorknoten befindlichen Quarze sind für eine Synchronisation nicht ausreichend stabil. Deren Frequenzabhängigkeit von Temperatur, Feuchtigkeit und Spannungsversorgung an den jeweiligen Sensorknoten, führt zu einem Auseinanderlaufen der jeweiligen Referenzsignale. Die daher erforderliche Übertragung der globalen Zeit im Netzwerk durch mehrere Sensorknoten oder Router, braucht längere Zeit und erfordert einen größeren Aufwand.

Es ist daher die Aufgabe der Erfindung, ein Sensornetzwerk und ein entsprechenden Steuerungsverfahren anzugeben, welcher die obengenannten Probleme beseitigt bzw. zumindest verringert.

Diese Aufgabe wird durch ein Ultrabreitband- und/oder Infrarot-Sensornetzwerk mit den Merkmalen des Anspruchs 1 und ein Steuerungsverfahren eines Ultrabreitband- und/oder Infrarot-Sensornetzwerks mit den Merkmalen des Anspruchs 11 gelöst. Zweckmäßige Fortbildungen des Erfindungsgedankens sind Gegenstand der abhängigen Ansprüche.

Das erfindungsgemäße Ultrabreitband- und Infrarot- Sensornetzwerk ist zur Erfassung, Verarbeitung und Übertragung von Daten in einem Raum geeignet. Das Netzwerk weist mindestens ein Empfängermodul mit einem Ultrabreitband- und/oder optischen Empfänger, mindestens eine Lichtquelle zur Erzeugung und zur Verteilung des Lichtes im Raum, die mittels einer Leitung bzw. einer Kabelleitung mit dem Empfängermodul verbunden ist und eine Mehrheit von im Raum verteilten Sensorknoten mit einer Sensorelektronikeinheit zur Erfassung und Verarbeitung von Daten, auf.

Die Sensorknoten weisen jeweils ein mit der Lichtquelle gekoppeltes Photovoltaik-Element zur Versorgung der Sensorelektronikeinheit und gleichzeitig zum Empfang von Daten aus der Lichtquelle und jeweils ferner einen mit dem Ultrabreitband- und/oder optischen Empfänger gekoppelten Ultrabreitband- bzw. Infrarot-Sender, auf.

Im Besonderen werden die Daten zu den Sensorknoten vom Empfängermodul über die Leitung zur Lichtquelle und von der Lichtquelle über ein Lichtsignal übertragen.

Auf der anderen Seite werden die Daten zum Empfängermodul von den Sensorknoten über ein Ultrabreitband- bzw. Infrarotsignal mittels einer Koppelung zwischen dem Ultrabreitband- bzw. Infrarot-Sender und dem Ultrabreitband- und/oder optischen Empfänger übertragen.

Ein solches Sensornetzwerk weist eine heterogene Sende-Empfangsarchitektur auf. In der Tat, dient die gesamte Architektur sowohl als Energiequelle für das Sensornetzwerk bzw. für die Sensorknoten als auch als Sender zur Übertragung von Informationen von der Lichtquelle zu den Sensorknoten und als Empfang für die von den Sensorknoten drahtlos übertragenen Daten.

Somit wird eine erhebliche Energieeinsparung erreicht, da die Sensorknoten keine Ultrabreitband- oder Infrarot- Empfänger benötigen. Die Daten werden hierbei durch den Energie-Wandler bzw. durch das Photovoltaik-Element empfangen, das gleichzeitig als Energieerzeuger dient. In anderen Worten, kommt hierbei eine sogenannte "Visible Light Communication"-Technologie zum Einsatz, die - unter anderem - geringere Installationskosten, keine elektromagnetische Störungen und eine längere Lebensdauer vorsieht.

Da die Sensorknotendaten über Ultrabreitband- bzw. Infrarotsignal übertragen werden, wird außerdem durch ein solches Sensornetzwerk eine einfache Realisierung der elektromagnetischen Verträglichkeit erreicht.

Das erfindungsgemäße Sensornetzwerk eignet sich besonders für die Raumfahrt, in der eine hohe Zuverlässigkeit der Sensorknoten sowie eine bestimmte Flexibilität der Komponenten erfordert ist.

In einer Ausführungsform der Erfindung dient das Empfängermodul als Router zwischen den Sensorknoten zum Empfang und zur nachfolgenden Weiterleitung der erfassten Daten von den Sensorknoten sowie zum Senden von Daten zu den Sensorknoten.

Der Verkabelungsaufwand wird hierbei auf die Verbindung zwischen dem Empfängermodul und der Lichtquelle und eventuell auf die Datenweiterleitung (optisch, Ethernet, etc.) begrenzt, so dass das gesamte Sensornetzwerk drahtlos in einem beliebigen Raum eingesetzt werden kann.

In einer weiteren Ausführungsform der Erfindung, bildet das Empfängermodul eine kabelgestützte Verbindung mit einem Accesspoint.

Durch die Nutzung einer Datenleitung, wird die Datenübertragung vom Empfängermodul zu dem Accesspoint, und umgekehrt, zuverlässiger. Außerdem wird somit die Zeitsynchronisierung zwischen den Sensorknoten und dem Accesspoint verbessert, da die Zeitinformationen für die Synchronisierung und Befehle gleichzeitig an die Sensorknoten weitergeleitet werden.

In einer bevorzugten Ausführungsform der Erfindung, umfasst das Sensornetzwerk eine Mehrheit von miteinander kabelverbundenen Empfängermodulen, wobei mindestens ein Empfängermodul mit mindestens einer Lichtquelle verbunden ist.

Somit kann das Sensornetzwerk räumlich verteilt werden, ohne dass die Daten verloren gehen. Hierbei wird ein Netzwerk von miteinander verbundenen Routern (Empfängermodule) gebildet, das eine schnelle und zuverlässige Datenübertragung ermöglicht.

Im Besonderen wird die Mehrheit von Sensorknoten in Sensorknotengruppen aufgeteilt, wobei jede Sensorknotengruppe die Daten zu einem entsprechenden Empfängermodul überträgt.

Somit kann ein Empfängermodul mit einer begrenzten Anzahl von Sensorknoten verbunden werden. Dies vereinfacht und beschleunigt die Datenübertragung zwischen den Sensorknoten und dem Empfängermodul. Die Sensorknotengruppen können beispielsweise wegen deren Position zum Empfängermodul oder wegen deren Sensoreigenschaften bzw. der erfassten physikalischen Größen gruppiert werden.

In einer noch bevorzugten Ausführungsform der Erfindung, weist die Lichtquelle eine organische Leuchtdiode auf, die als Energiequelle und gleichzeitig als Datensender dient.

Die Bauformen einer organischen Leuchtdiode bzw. OLED sind dünn und vergossen und somit gegen Umwelteinflüsse, insbesondere Oxidation und Feuchtigkeit, geschützt. Als Vorteil erzeugen die OLED ein weicheres und diffuseres Licht und haben, gegenüber Standard-Leuchtdioden, einen geringeren Strombedarf und erweiterten Temperaturbereich bzw. Strahlwinkel.

Aufgrund einer konstanten Stromversorgung und des Einsatzes organischer Leuchtdioden, kann ein effizienterer Aufbau der Empfängermodul/Router erreicht werden.

In einer Ausführungsform der Erfindung, entspricht das Photovoltaik-Element einer Solarzelle, die speziell für das Emissionsspektrum der Lichtquelle optimiert ist. Vorteilhaft kann die Solarzelle eine Tandem-Solarzelle, eine organische Solarzelle usw. sein.

In einer erweiterten Ausführungsform der Erfindung, weist das Sensornetzwerk ferner mindestens ein Lichtreflexionselement zur Ablenkung und Steuerung des Lichtes bzw. des Lichtsignals von der Lichtquelle zum entsprechenden Photovoltaik-Element und/oder mindestens ein Signalreflexionselement zur Ablenkung und Steuerung des Ultrabreitband- bzw. Infrarotsignals von dem Ultrabreitband- bzw. Infrarot-Sender zum entsprechenden Ultrabreitband- und/oder optischen Empfänger, auf.

Somit können die Sensorknoten überall im Raum angeordnet werden, ohne dass ein Störelement die Datenübertragung über das Ultrabreitband- bzw. Infrarotsignal bzw. das Lichtsignal verhindert.

In einer besonderen Ausführungsform, weisen die Sensorknoten jeweils einen oder mehrere Sensoren zur Erfassung von physikalischen Eigenschaften auf.

Somit können verschiedenen physikalischen Größen gleichzeitig gemessen bzw. erfasst und weiterhin die entsprechende Daten verarbeitet werden. Eine solche Gestaltung, erlaubt eine komplexere Auswertung zum Beispiel der Raumeigenschaften, wie zum Beispiel, Temperatur, Feuchtigkeit oder Helligkeit, da verschiedene Dateninformationen gesammelt, kombiniert und somit ausgewertet werden können.

Um die erfassten Daten zu verarbeiten, weist die Sensorelektronikeinheit einen Mikrokontroller auf. Der Mikrokontroller kann zusätzlich einen Arbeitsspeicher beinhalten. Somit können die Daten vor Ort verarbeitet und nur die hierfür benötigten Informationen weitergeleitet werden.

Das erfindungsgemäße Steuerungsverfahren ist für ein Ultrabreitband- und/oder Infrarot- Sensornetzwerks geeignet, wobei das Sensornetzwerk aus mindestens einem Empfängermodul mit einem Ultrabreitband- und/oder optischen Empfänger, aus mindestens einer Lichtquelle zur Erzeugung und zur Verteilung des Lichtes in einem Raum, die mittels einer Leitung bzw. einer Kabelleitung mit dem Empfängermodul verbunden ist und aus einer Mehrheit von im Raum verteilten Sensorknoten mit einer Sensorelektronikeinheit zur Erfassung und Verarbeitung von Daten und einem mit der Lichtquelle gekoppelten Photovoltaik-Element, besteht.

Das Steuerungsverfahren weist die Datenübertragung von dem Empfängermodul über die Leitung zur Lichtquelle und die Datenübertragung von der Lichtquelle über das Licht zu der Mehrheit von Sensorknoten mittels des Photovoltaik-Elementes und Datenverarbeitung mittels der Sensorelektronikeinheit auf. Hierbei dient insbesondere das Photovoltaik-Element gleichzeitig zur Versorgung der Sensorelektronikeinheit.

Ferner weist das Steuerungsverfahren die Datenübertragung von den Sensorknoten über ein Ultrabreitband- bzw. Infrarotsignal zum Empfängermodul mittels einer Koppelung zwischen einem in jedem Sensorknoten aufweisenden Ultrabreitband- bzw. Infrarot-Sender und dem Ultrabreitband- und/oder optischen Empfänger, auf.

Somit wird ein Steuerungsverfahren erreicht, welches die Übertragung von Dateninformationen in einem Raum mit einem geringeren Energieverbrauch und unter Berücksichtigung der elektromagnetischen Verträglichkeit bzw. einer verbesserten Zeitsynchronisierung ermöglicht.

Vorteile und Zweckmäßigkeiten der Erfindung ergeben sich im Übrigen aus der nachfolgenden Beschreibung ausgewählter Ausführungsbeispiele anhand der Figuren. Von diesen zeigen:
- Fig.1: eine schematische Darstellung eines Sensornetzwerks gemäß einer Ausführungsform der Erfindung,
- Fig.2: eine schematische Darstellung eines Sensorknotens gemäß einer Ausführungsform der Erfindung, und
- Fig.3: eine schematische Darstellung eines erweiterten Sensornetzwerks gemäß einer Ausführungsform der Erfindung.

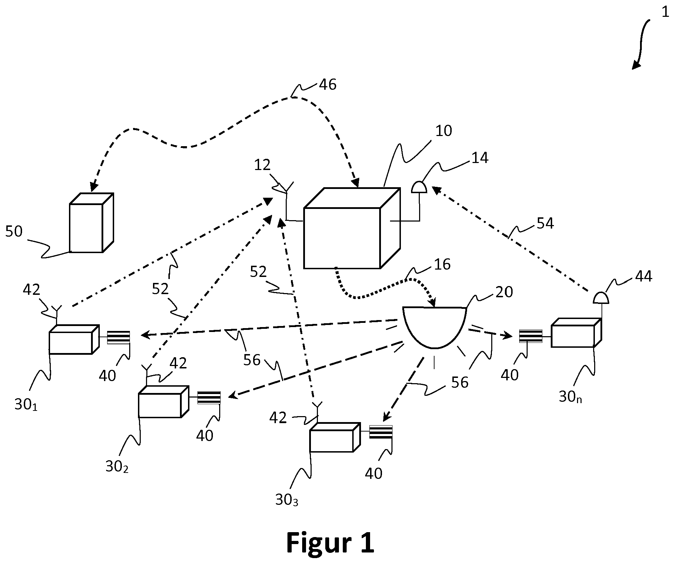

Die Figur 1 beschreibt eine Darstellung eines Ultrabreitband- und/oder Infrarot- Sensornetzwerk 1 zur Erfassung, Verarbeitung und Übertragung von Daten in einem Raum. Das Sensornetzwerk 1 weist ein Empfängermodul 10 mit einem Ultrabreitbandempfänger 12 und/oder einem optischen Empfänger 14 auf. Das Empfängermodul 10 steht durch eine Kabelleitung 16 mit einer Lichtquelle 20 bzw. einer organischen Leuchtdiode in Verbindung. Das Sensornetzwerk 1 weist ferner eine Mehrheit von Sensorknoten 30₁, 30₂, 30₃, ... 30ₙ auf, die im Raum verteilt sind. Die Sensorknoten 30₁, 30₂, 30₃, ... 30ₙ weisen jeweils eine Solarzelle 40 und einen Ultrabreitbandsender 42 bzw. einen Infrarotsender 44 auf. Das Empfängermodul 10 ist schließlich durch eine Datenleitung 46 mit einem Accesspoint 50 verbunden.

In einem solchen Sensornetzwerk, erfassen die Sensorknoten 30₁, 30₂, 30₃, ... 30ₙ die Informationsdaten aus der Umgebung. Diese können in den Sensorknoten 30₁, 30₂, 30₃, ... 30ₙ verarbeitet und zum Empfängermodul 10 übertragen werden. Die Übertragung erfolgt über ein Ultrabreitbandsignal 52 von dem Ultrabreitbandsender 42 zum Ultrabreitbandempfänger 12 oder über ein Infrarotsignal 54 vom Infrarotsender 44 zum optischen Empfänger 14. Die erfassten bzw. verarbeiteten Daten, werden vom Empfängermodul 10 zum Accesspoint 50 weitergeleitet.

Durch die Datenleitung 46, kommuniziert das Empfängermodul 10 mit dem Accesspoint 50, wobei Befehle und anderen Informationsdaten zu den Sensorknoten 30₁, 30₂, 30₃, ... 30ₙ übertragen werden. Die Übertragung erfolgt zunächst über die Leitungsverbindung 16 zur Lichtquelle 20 und dann von der Lichtquelle 20 über ein Lichtsignal 56 zu den Sensorknoten 30₁, 30₂, 30₃, ... 30ₙ. Das Lichtsignal 56 wird insbesondere von den entsprechenden Solarzellen 40 empfangen. Gleichzeitig wandeln die Solarzellen 40 die von der Lichtquelle 20 verbreitete Lichtenergie in elektrische Energie zur Versorgung der elektrischen Komponenten der Sensorknoten 30₁, 30₂, 30₃, ... 30ₙ um.

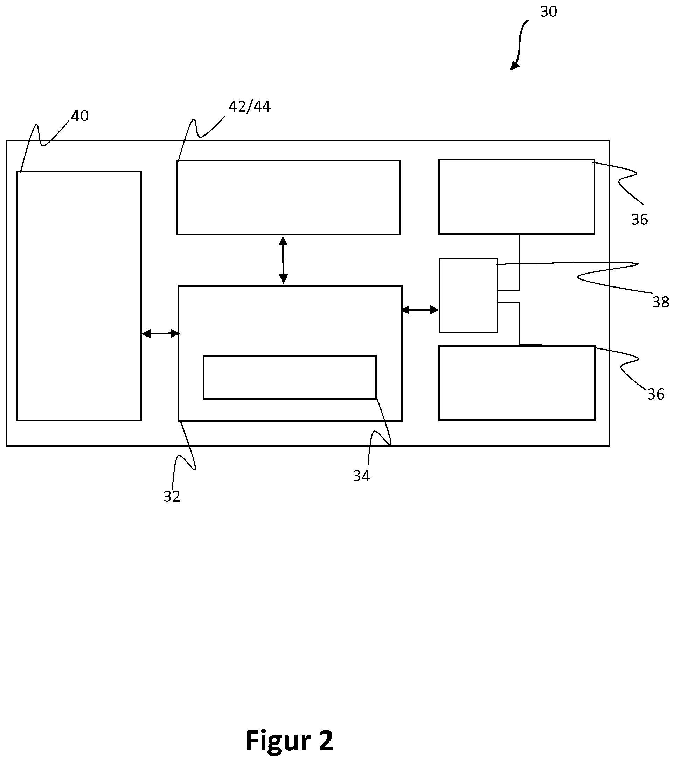

Die Figur 2 beschreibt eine schematische Darstellung eines Sensorknoten 30. Der Sensorknoten 30 weist einen einer Sensorelektronikeinheit zugeordneten Mikrokontroller 32 zur Datenverarbeitung und Funktionalitätsüberwachung der Komponenten des Sensorknoten 30 auf. Der Mikrokontroller 32 steht mit einem Arbeitsspeicher 34, der Solarzelle 40, dem Ultrabreitband- bzw. Infrarotsender 42/44 und mit (beispielhaft) zwei Sensoren 36 über ein A/D Umsetzer (ADC) 38 in Verbindung. Der Arbeitsspeicher 34 ist ein On-Chip-Speicher des Mikrokontrollers 32 oder Flash-Speicher. Im Besonderen kann der Arbeitsspeicher 34 einem Programmspeicher zur Programmierung des Sensorknoten 30 entsprechen. Die Solarzelle 40 bildet zusammen mit dem Ultrabreitband- bzw. Infrarotsender 42/44 eine Art von Sende- und Empfängermodul zum Empfang von Daten über die Solarzelle 40 und zum Senden der Daten über den Ultrabreitband- bzw. Infrarotsender 42/44. Die Solarzelle 40 dient außerdem als Stromquelle für die Komponenten des Sensorknoten 30. Die Sensoren 36 erfassen die physikalischen Daten der zu überwachenden Parameter, wobei die Sensoren 36 passiv oder aktiv sein können. Das von den Sensoren 36 erzeugte Analogsignal wird durch einem A/D Umsetzer 38 digitalisiert und zum Mikrokontroller 32 zur Weiterverarbeitung gesendet.

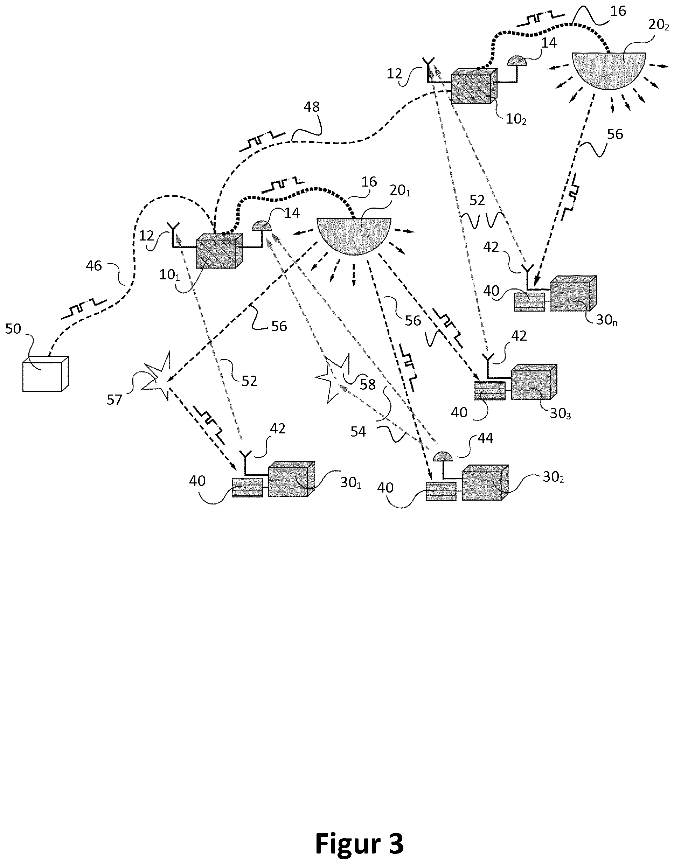

Die Figur 3 beschreibt ein erweitertes Sensornetzwerk 1, in dem zwei Empfängermodule 10₁, 10₂ durch eine Datenleitung 48 miteinander und durch eine Datenleitung 46 mit einem Accesspoint 50 in Verbindung stehen. Außerdem stehen die Empfängermodule 10₁, 10₂ jeweils durch eine Kabelleitung 16 mit einer Lichtquelle 20₁, 20₂ in Verbindung. Das in der Figur 3 beschriebene Sensornetzwerk 1 weist ferner eine Mehrheit von Sensorknoten 30₁, 30₂, 30₃, ... 30ₙ auf, die im Raum verteilt sind. Diese Sensorknoten 30₁, 30₂, 30₃, ... 30ₙ weisen jeweils eine Solarzelle 40 und einen Ultrabreitbandsender 42 bzw. einen Infrarotsender 44 auf. Die Datenübertragung erfolgt hierbei auf die gleiche Art und Weise, wie die in der Figur 1 beschriebene Datenübertragung. Die Daten werden zu den Sensorknoten 30₁, 30₂, 30₃, ... 30ₙ vom Empfängermodul 10₁, 10₂ über die Leitung 16 zur Lichtquelle 20₁, 20₂ und von der Lichtquelle 20₁, 20₂ über ein Lichtsignal 56 übertragen. Die Daten werden zum Empfängermodul 10₁, 10₂ von Sensorknoten 30₁, 30₂, 30₃, ... 30ₙ über ein Ultrabreitband- 52 bzw. Infrarotsignal 54 mittels der Koppelung zwischen dem Ultrabreitband-42 bzw. Infrarot-Sender 44 und/oder dem Ultrabreitband- 12 und optischen Empfänger 14 übertragen. Außerdem kann die Datenübertragung von einem Empfängermodul 10₁ zum anderen Empfängermodul 10₂ über die Datenleitung 48 erfolgen.

Aus der Figur 3 ist zu entnehmen, dass ferner ein Lichtreflexionselement 57 und/oder ein Signalreflexionselement 58 vorgesehen sind. Das Lichtreflexionselement 57 dient als Ablenker und Steuerung des Lichtsignales 57 von der Lichtquelle 20₁ zum entsprechenden Photovoltaik-Element 40, während das Signalreflexionselement 58 zur Ablenkung und Steuerung des Infrarotsignals 54 vom dem Infrarot-Sender 44 zum entsprechenden optischen Empfänger 14 des Empfängermoduls 10₁ wirkt. Selbstverständlich, kann das Signalreflexionselement 58 ebenfalls als Ablenker und Steuerung des Ultrabreitbandsignals 52 vom dem Ultrabreitband-Sender 42 zum entsprechenden optischen Empfänger 12 eingesetzt werden.

Wie bereits erwähnt, kann die Mehrheit von Sensorknoten 30₁, 30₂, 30₃, ... 30ₙ in Untergruppen aufgeteilt werden, so dass jede Untergruppe lediglich mit einem bestimmten Empfängermodul 10₁, 10₂ bzw. einer Lichtquelle 20₁, 20₂ in Verbindung steht. Dennoch kann ein Sensorknoten 30 gleichzeitig mit zwei unterschiedlichen Empfängermodulen 10₁, 10₂ oder Lichtquellen 20₁, 20₂ kommunizieren. Die Figur 3 zeigt beispielsweise einen Sensorknoten 30₃, der die Daten über das Ultrabreitbandsignal 52 zu dem Empfängermodul 10₂ überträgt und gleichzeitig die Daten über das Lichtsignal 56 aus einer Lichtlampe 20₁ empfängt, die dem anderen Empfängermodul 10₁ zugeordnet ist.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

Offenbart ist Ultrabreitband- und/oder Infrarot- Sensornetzwerk und entsprechendes Steuerungsverfahren zur Erfassung, Verarbeitung und Übertragung von Daten in einem Raum, umfassend mindestens ein Empfängermodul mit einem Ultrabreitband- und/oder optischen Empfänger, mindestens eine Lichtquelle zur Erzeugung und zur Verteilung des Lichtes im Raum, die eine Leitungsverbindung mit dem Empfängermodul bildet und eine Mehrheit von im Raum verteilten Sensorknoten mit einer Sensorelektronikeinheit zur Erfassung und Verarbeitung von Daten, wobei die Sensorknoten jeweils ein mit der Lichtquelle gekoppelten Photovoltaik-Element zur Versorgung der Sensorelektronikeinheit und gleichzeitig zum Empfang von Daten aus der Lichtquelle und jeweils ferner einen mit dem Ultrabreitband- und/oder optischen Empfänger gekoppelten Ultrabreitband- bzw. Infrarot-Sender, aufweisen, und wobei die Daten zu den Sensorknoten vom Empfängermodul über die Leitungsverbindung zur Lichtquelle und von der Lichtquelle über ein Lichtsignal übertragen werden und wobei die Daten zum Empfängermodul von Sensorknoten über ein Ultrabreitband- bzw. Infrarotsignal mittels der Koppelung zwischen dem Ultrabreitband- bzw. Infrarot-Sender und dem Ultrabreitband- und/oder optischen Empfänger übertragen werden.

### Bezugszeichenliste

- 1: Sensornetzwerk
- 10: Empfängermodul
- 12: Ultrabreitbandempfänger
- 14: optischer Empfänger
- 16: Leitung
- 20: Lichtquelle
- 30: Sensorknoten
- 32: Mikrokontroller
- 34: Speicher
- 36: Sensor
- 38: A/D Umsetzer
- 40: Photovoltaik-Element
- 42: Ultrabreitbandsender
- 44: Infrarotsender
- 46: Datenleitung
- 48: Datenleitung
- 50: Accesspoint
- 52: Ultrabreitbandsignal
- 54: Infrarotsignal
- 56: Lichtsignal
- 57: Lichtreflexionselement
- 58: Signalreflexionselement

## Patentansprüche

1. Ultrabreitband- und/oder Infrarot- Sensornetzwerk (1) zur Erfassung, Verarbeitung und Übertragung von Daten in einem Raum, umfassend:
mindestens ein Empfängermodul (10) mit einem Ultrabreitband- und/oder optischen Empfänger (12, 14);
mindestens eine Lichtquelle (20) zur Erzeugung und zur Verteilung des Lichtes im Raum, die mittels einer Leitung (16) mit dem Empfängermodul (10) verbunden ist;
und eine Mehrheit von im Raum verteilten Sensorknoten (30₁, 30₂, 30₃, ...30ₙ) mit einer Sensorelektronikeinheit zur Erfassung und Verarbeitung von Daten,
wobei die Sensorknoten (30₁, 30₂, 30₃,...30ₙ) jeweils ein mit der Lichtquelle gekoppeltes Photovoltaik-Element (40) zur Versorgung der Sensorelektronikeinheit und gleichzeitig zum Empfang von Daten aus der Lichtquelle (20) und jeweils ferner einen mit dem Ultrabreitband- und/oder optischen Empfänger (12, 14) gekoppelten Ultrabreitband- bzw. Infrarot-Sender (42, 44), aufweisen, und
wobei die Daten zu den Sensorknoten (30₁, 30₂, 30₃,...30ₙ) vom Empfängermodul (10) über die Leitung (16) zur Lichtquelle (20) und von der Lichtquelle (20) über ein Lichtsignal (56) übertragen werden und
wobei die Daten zum Empfängermodul (10) von den Sensorknoten (30₁, 30₂, 30₃,...30ₙ) über ein Ultrabreitband- bzw. Infrarotsignal (52, 54) mittels einer Koppelung zwischen dem Ultrabreitband- bzw. Infrarot-Sender (42, 44) und dem Ultrabreitband- und/oder optischen Empfänger (12, 14) übertragen werden,
ferner umfassend mindestens ein Lichtreflexionselement (57) zur Ablenkung und Steuerung des Lichtes von der Lichtquelle (20) zum entsprechenden Photovoltaik-Element (40).

2. Sensornetzwerk (1) nach Anspruch 1, wobei das Empfängermodul (10) als Router zwischen den Sensorknoten (30₁, 30₂, 30₃,...30ₙ) zum Empfang und zur nachfolgenden Weiterleitung der erfassten Daten von den Sensorknoten (30₁, 30₂, 30₃,...30ₙ) sowie zum Senden von Daten zu den Sensorknoten (30₁, 30₂, 30₃,...30ₙ) dient.

3. Sensornetzwerk (1) nach einem der vorhergehenden Ansprüche, wobei das Empfängermodul (10) eine kabelgestützte Verbindung (46) mit einem Accesspoint (50) bildet.

4. Sensornetzwerk (1) nach einem der vorhergehenden Ansprüche, umfassend eine Mehrheit von miteinander kabelverbundenen Empfängermodulen (10₁, 10₂), wobei mindestens ein Empfängermodul (10₁, 10₂) mit mindestens einer Lichtquelle (20₁, 20₂) verbunden ist.

5. Sensornetzwerk (1) nach Anspruch 4, wobei die Mehrheit von Sensorknoten (30₁, 30₂, 30₃,...30ₙ) in Sensorknotengruppen aufgeteilt wird und jede Sensorknotengruppe die Daten zu einem entsprechenden Empfängermodul (10₁, 10₂) überträgt.

6. Sensornetzwerk (1) nach einem der vorhergehenden Ansprüche, wobei das Photovoltaik-Element (40) einer für das Emissionsspektrum der Lichtquelle (20) optimierten Solarzelle entspricht.

7. Sensornetzwerk (1) nach einem der vorhergehenden Ansprüche, ferner umfassend mindestens ein Signalreflexionselement (58) zur Ablenkung und Steuerung des Ultrabreitband- bzw. Infrarotsignals (54, 56) von dem Ultrabreitband- bzw. Infrarot-Sender (42, 44) zum entsprechenden Ultrabreitband- und optischen Empfänger (12, 14).

8. Sensornetzwerk (1) nach einem der vorhergehenden Ansprüche, wobei die Sensorknoten (30₁, 30₂, 30₃,...30ₙ) jeweils einen oder mehrere Sensoren (36) zur Erfassung von physikalischen Eigenschaften aufweisen.

9. Sensornetzwerk (1) nach einem der vorhergehenden Ansprüche, wobei die Sensorelektronikeinheit einen Mikrocontroller (32) aufweist.

10. Sensornetzwerk (1) nach einem der vorhergehenden Ansprüche, wobei die Lichtquelle (20) eine organische Leuchtdiode nutzt, die als Energiequelle und gleichzeitig als Datensender dient.

11. Steuerungsverfahren eines Ultrabreitband- und/oder Infrarot- Sensornetzwerks (1), das aus mindestens einem Empfängermodul (10) mit einem Ultrabreitband- und/oder optischen Empfänger (12, 14), aus mindestens einer Lichtquelle (20) zur Erzeugung und zur Verteilung des Lichtes in einem Raum, die mit einer Leitung (16) mit dem Empfängermodul (10) verbunden ist und aus einer Mehrheit von im Raum verteilten Sensorknoten (30₁, 30₂, 30₃,...30ₙ) mit einer Sensorelektronikeinheit zur Erfassung und Verarbeitung von Daten und einem mit der Lichtquelle (20) gekoppelten Photovoltaik-Element (40), besteht, umfassend:
Datenübertragung von dem Empfängermodul (10) über die Leitung (16) zur Lichtquelle (20),
Datenübertragung von der Lichtquelle (20) über ein Lichtsignal (56) zu der Mehrheit von Sensorknoten (30₁, 30₂, 30₃,...30ₙ) mittels des Photovoltaik-Elementes (40) und Datenverarbeitung mittels der Sensorelektronikeinheit, wobei das Photovoltaik-Element (40) gleichzeitig zur Versorgung der Sensorelektronikeinheit dient, und
Datenübertragung von den Sensorknoten (30₁, 30₂, 30₃,...30ₙ) über ein Ultrabreitband- bzw. Infrarotsignal (52, 54) zum Empfängermodul (10) mittels einer Koppelung zwischen einem Ultrabreitband- bzw. Infrarot-Sender (42, 44), den jeder Sensorknoten (30₁, 30₂, 30₃,...30ₙ) aufweist, und dem Ultrabreitband- und/oder optischen Empfänger (12, 14),
wobei die Datenübertragung von der Lichtquelle (20) zu mindestens einem der Sensorknoten durch mindestens ein Lichtreflexionselement (57) abgelenkt und zum entsprechenden Photovoltaik-Element (40) gesteuert wird.

## Claims

1. An ultra-wideband and/or infrared sensor network (1) for acquiring, processing and transmitting data in a three-dimensional area, comprising:
at least one receiver module (10) with an ultra-wideband and/or optical receiver (12, 14);
at least one light source (20) for generating and distributing the light in the three-dimensional area, connected to the receiver module (10) by means of a line (16);
and a plurality of sensor nodes (30₁, 30₂, 30₃, ... 30ₙ) distributed in the three-dimensional area and having a sensor electronics unit for the acquisition and processing of data,
wherein the sensor nodes (30₁, 30₂, 30₃, ... 30ₙ) each having a photovoltaic element (40) coupled to the light source for supplying the sensor electronics unit and simultaneously for receiving data from the light source (20) and each further having an ultra-wideband or infrared transmitter (42, 44) coupled to the ultra-wideband or optical receiver (12, 14), and
the data to the sensor nodes (30₁, 30₂, 30₃, ... 30ₙ) being transmitted from the receiver module (10) via the line (16) to the light source (20) and from the light source (20) via a light signal (56), and
wherein the data is transmitted to the receiver module (10) from the sensor nodes (30₁, 30₂, 30₃, ... 30ₙ) via an ultra-wideband or infrared signal (52, 54) by means of a coupling between the ultra-wideband or infrared transmitter (42, 44) and the ultra-wideband or optical receiver (12, 14),
further comprising at least one light-reflecting element (57) for deflecting and directing the light from the light source (20) to the corresponding photovoltaic element (40).

2. Sensor network (1) according to claim 1, wherein the receiver module (10) serves as a router between the sensor nodes (30₁, 30₂, 30₃, ... 30ₙ) for receiving and subsequently forwarding the acquired data from the sensor nodes (30₁, 30₂, 30₃, ... 30ₙ) and for sending data to the sensor nodes (30₁, 30₂, 30₃, ... 30ₙ).

3. Sensor network (1) according to one of the preceding claims, wherein the receiver module (10) forms a cable connection (46) with an access point (50).

4. Sensor network (1) according to any of the preceding claims, comprising a plurality of receiver modules (10₁, 10₂) connected to one another via cables, wherein at least one receiver module (101, 102) is connected to at least one light source (20₁, 20₂).

5. Sensor network (1) according to claim 4, wherein the plurality of sensor nodes (30₁, 30₂, 30₃, ... 30ₙ) are divided into sensor node groups and each sensor node group transmits the data to a respective receiver module (10₁, 10₂).

6. Sensor network (1) according to any of the preceding claims, wherein the photovoltaic element (40) is a solar cell optimized for the emission spectrum of the light source (20).

7. Sensor network (1) according to any of the preceding claims, further comprising at least one signal-reflecting element (58) for deflecting and directing the ultra-wideband or infrared signal (54, 56) from the ultra-wideband or infrared transmitter (42, 44) to the respective ultra-wideband and optical receiver (12, 14).

8. Sensor network (1) according to one of the preceding claims, wherein the sensor nodes (30₁, 30₂, 30₃, ... 30ₙ) each having one or more sensors (36) for detecting physical properties.

9. Sensor network (1) according to one of the preceding claims, wherein the sensor electronics unit has a microcontroller (32).

10. Sensor network (1) according to one of the preceding claims, wherein the light source (20) uses an organic light-emitting diode which serves as an energy source and simultaneously as a data transmitter.

11. Control method of an ultra-wideband and/or infrared sensor network (1), which consists of at least one receiver module (10) with an ultra-wideband and/or optical receiver (12, 14), of at least one light source (20) for generating and distributing the light in a three-dimensional area, which is connected to the receiver module (10) by a line (16), and of a plurality of sensor nodes (30₁, 30₂, 30₃, ... 30ₙ) distributed in the three-dimensional area having a sensor electronics unit for acquiring and processing data and a photovoltaic element (40) coupled to the light source (20), comprising:
data transmission from the receiver module (10) via the line (16) to the light source (20),
data transmission from the light source (20) via a light signal (56) to the plurality of sensor nodes (30₁, 30₂, 30₃, ... 30ₙ) by means of the photovoltaic element (40) and data processing by means of the sensor electronics unit, the photovoltaic element (40) simultaneously serving to supply the sensor electronics unit, and
data transmission from the sensor nodes (30₁, 30₂, 30₃, ... 30ₙ) via an ultra-wide band or infrared signal (52, 54) to the receiver module (10) by means of a coupling between an ultra-wideband or infrared transmitter (42, 44), which each sensor node (30₁, 30₂, 30₃, ... 30ₙ) has, and the ultra-wideband and/or optical receiver (12, 14),
wherein the data transmission from the light source (20) to at least one of the sensor nodes is deflected by at least one light reflection element (57) and directed to the respective photovoltaic element (40).

## Revendications

1. Un réseau de capteurs à bande ultralarge et/ou infrarouge (1) pour l'acquisition, le traitement et la transmission de données dans un espace à trois dimensions, comprenant
au moins un module de réception (10) avec un récepteur à bande ultra-large et/ou optique (12, 14) ;
au moins une source de lumière (20) pour générer et distribuer la lumière dans l'espace à trois dimensions, connectée au module récepteur (10) au moyen d'une ligne (16) ;
et une pluralité de nœuds de capteurs (30₁, 30₂, 30₃, ... 30ₙ) répartis dans l'espace à trois dimensions et disposant d'une unité électronique de détection pour l'acquisition et le traitement des données,
dans lequel les nœuds de capteur (30₁, 30₂, 30₃, ... 30ₙ) comprennent chacun un élément photovoltaïque (40) couplé à la source de lumière pour alimenter l'unité électronique de détection et simultanément pour recevoir des données de la source de lumière (20) et comprenant en outre chacun un émetteur à bande ultra-large ou infrarouge (42, 44) couplé au récepteur à bande ultra-large ou optique (12, 14), et
les données aux nœuds de capteurs (30₁, 30₂, 30₃, ... 30ₙ) étant transmises du module récepteur (10) par la ligne (16) à la source lumineuse (20) puis de la source lumineuse (20) par un signal lumineux (56), et
dans lequel les données sont transmises au module récepteur (10) par les nœuds de capteurs (30₁, 30₂, 30₃, ... 30ₙ) par un signal à bande ultra large ou infrarouge (52, 54) au moyen d'un couplage entre l'émetteur à bande ultra large ou infrarouge (42, 44) et le récepteur à bande ultra large ou optique (12, 14),
comprenant en outre au moins un élément réfléchissant la lumière (57) pour dévier et diriger la lumière de la source lumineuse (20) vers l'élément photovoltaïque correspondant (40).

2. Réseau de capteurs (1) selon la revendication 1, dans lequel le module récepteur (10) sert de routeur entre les nœuds de capteurs (30₁, 30₂, 30₃, ... 30ₙ) pour recevoir et ensuite transmettre les données acquises des nœuds de capteurs (30₁, 30₂, 30₃, ... 30ₙ) et pour envoyer des données aux nœuds de capteurs (30₁, 30₂, 30₃, ... 30ₙ).

3. Réseau de capteurs (1) selon l'une des revendications précédentes, dans lequel le module récepteur (10) forme une connexion par câble (46) avec un point d'accès (50).

4. Réseau de capteurs (1) selon l'une des revendications précédentes, comprenant une pluralité de modules récepteurs (10₁, 10₂) reliés entre eux par des câbles, dans lequel au moins un module récepteur (10₁, 10₂) est relié à au moins une source de lumière (20₁, 20₂).

5. Réseau de capteurs (1) selon la revendication 4, dans lequel la pluralité des nœuds de capteurs (30₁, 30₂, 30₃, ... 30ₙ) sont divisés en groupes de nœuds de capteurs et chaque groupe de nœuds de capteurs transmet les données à un module récepteur respectif (10₁, 10₂).

6. Réseau de capteurs (1) selon l'une des revendications précédentes, dans lequel l'élément photovoltaïque (40) est une cellule solaire optimisée pour le spectre d'émission de la source de lumière (20).

7. Réseau de capteurs (1) selon l'une des revendications précédentes, comprenant en outre au moins un élément réfléchissant le signal (58) pour dévier et diriger le signal à bande ultra-large ou infrarouge (54, 56) de l'émetteur à bande ultra-large ou infrarouge (42, 44) vers le récepteur à bande ultra-large et optique respectif (12, 14).

8. Réseau de capteurs (1) selon l'une des revendications précédentes, dans lequel les nœuds de capteurs (30₁, 30₂, 30₃, ... 30ₙ) ont chacun un ou plusieurs capteurs (36) pour détecter des propriétés physiques.

9. Réseau de capteurs (1) selon l'une des revendications précédentes, dans lequel l'unité électronique de détection comprend un microcontrôleur (32).

10. Réseau de capteurs (1) selon l'une des revendications précédentes, dans lequel la source de lumière (20) utilise une diode électroluminescente organique qui sert de source d'énergie et simultanément de transmetteur de données.

11. Procédé de commande d'un réseau de capteurs (1) à bande ultra-large et/ou à infrarouge, constitué d'au moins un module récepteur (10) avec un récepteur (12, 14) à bande ultra-large et/ou optique, au moins une source de lumière (20) pour générer et distribuer la lumière dans un espace à trois dimensions, qui est reliée au module récepteur (10) par une ligne (16), et une pluralité de nœuds de capteurs (30₁, 30₂, 30₃, ... 30ₙ) répartis dans l'espace à trois dimensions, comprenant une unité électronique de détection pour l'acquisition et le traitement des données et un élément photovoltaïque (40) couplé à la source de lumière (20), comprenant:
transmission de données du module récepteur (10) par la ligne (16) à la source lumineuse (20),
transmission de données de la source lumineuse (20) par un signal lumineux (56) à la pluralité des nœuds de capteurs (30₁, 30₂, 30₃, ... 30ₙ) au moyen de l'élément photovoltaïque (40) et traitement des données au moyen de l'unité électronique de détection, l'élément photovoltaïque (40) servant en même temps à alimenter l'unité électronique de détection, et
transmission de données des nœuds de capteurs (30₁, 30₂, 30₃, ... 30ₙ) via un signal à bande ultra large ou infrarouge (52, 54) vers le module récepteur (10) au moyen d'un couplage entre un émetteur à bande ultra-large ou infrarouge (42, 44) que chaque nœuds de capteur (30₁, 30₂, 30₃, ... 30ₙ) comprend, et le récepteur à bande ultra-large et/ou optique (12, 14),
dans lequel la transmission de données de la source de lumière (20) vers au moins un des nœuds de capteur est déviée par au moins un élément réfléchissant la lumière (57) et dirigée vers l'élément photovoltaïque respectif (40).
